# EUROPEAN PATENT SPECIFICATION

(11) **EP 2 364 418 B1**
(45) Date of publication and mention of the grant of the patent: **18.10.2017**
(21) Application number: 08878008.5
(22) Date of filing: 31.12.2008
(51) Int. Cl.: F24F 3/16, F24F 1/00, F24F 6/12

(54) **AIR CONDITIONER**
KLIMAANLAGE
CLIMATISEUR

(30) Priority: 07.11.2008 KR 20080110642
(43) Date of publication of application: 14.09.2011
(73) Proprietor: LG Electronics Inc., Seoul 150-721 (KR)
(72) Inventor: CHOI, Yong Hyuk, Changwon-si Kyungsangnam-do 641-110 (KR); CHO, Jin Myeong, Changwon-si Kyungsangnam-do 641-110 (KR); JUNG, Seen Chul, Changwon-si Kyungsangnam-do 641-110 (KR)
(74) Representative: Cabinet Plasseraud
(86) International application number: PCT/KR2008/007837
(87) International publication number: WO 2010/053228

(56) References cited:
- WO-A1-2008/015851
- JP-A- 2006 046 732
- JP-A- 2006 046 732
- JP-A- 2007 010 179
- JP-A- 2008 035 998
- JP-A- 2008 035 998
- JP-A- 2008 039 317
- JP-A- 2008 039 317

## Description

### Technical Field

The present invention relates to an air conditioner, and more particularly, to an air conditioner which can perform humidification and purification in one apparatus.

### Background Art

In general, an air conditioner is used to change temperature, humidity, cleanliness, or the like of a room, and includes a cooler for cooling a room, a heater for heating a room, a dehumidifier for dehumidifying a room, a humidifier for humidifying a room, a purifier for cleaning room air and so forth.

If the above air conditioner is a cooler, a heater, or a dehumidifier, it comprises a heat exchange unit for heat-exchanging refrigerant with room air. If the above air conditioner is a purifier, it comprises a purification unit for purifying room air. If the above air conditioner is a humidifier, it comprises a humidification unit for supplying moisture to a room.

If the above air conditioner is a humidifier, it includes an ultrasonic humidifier, a heating-type humidifier, a combined humidifier, and so on.

The ultrasonic humidifier generates an ultrasonic wave from the bottom part of a container with water and breaks up and atomizes the water into small particles, in which cool vapor is used.

The heating type humidifier boils water in the humidifier and atomizes the water into vapor, in which hot vapor is used.

The combined humidifier makes the best use of the merits of the heating type and ultrasonic humidifiers by applying the methods of the heating type and ultrasonic humidifiers in a combined way. First, water is sterilized in a heating tube by increasing the water temperature and atomized by using ultrasonic waves. Depending on the situation, a selection can be made between 'hot vapor' and 'cool vapor'. However, the above-described air conditioner is an ultrasonic humidifier, a heating- type humidifier, or a combined humidifier which atomizes vapor directly onto the surrounding area. Therefore, moisture cannot be quickly supplied to an indoor area which is distant from the air conditioner, and if it is desired to increase the humidity of a room and clean the room air, it is necessary to provide a purifier and operate the purifier. An example of the related art can be found in JP 2008 039317, which discloses the preamble of claim 1, wherein the fan motor is placed in the rear side of the humidifier and the water container is placed in the lower front side of the humidifier.

### Disclosure

### Technical Problem

The present invention has been made in an effort to solve the prior art problems, and an object of the present invention is to provide an air conditioner which sucks and purifies room air, humidifies the air by natural evaporation and discharges it to the room, and is able to adjust humidity and cleanliness.

Another object of the present invention is to provide an air conditioner which allows to open a front door and easily attach and detach both a purification unit and a water container.

Still another object of the present invention is to provide an air conditioner which makes it easier to attach and detach a water container and a purification unit.

### Technical Solution

To achieve the above-described objects, there is provided an air conditioner according to the present invention, comprising: a main body having an air outlet and having an opening formed at the front thereof; a front door installed to cover or expose the opening; a blower installed on the main body; a water container containing water, and disposed to let the water in and out through the opening; a water guide installed within the main body so as to contain the water flown from the water container; a humidifying filter mounted on the water guide so as to supply moisture to air flowing toward the blower; and a purification unit disposed to purify the upper surface portion.

The front case has a lower air inlet formed at a lower portion.

The lower air inlet is formed to be opened longitudinally at a lower side between the opening and the water guide.

The opening is formed at one side panel portion close to the water container among left and right panel portions of the front case and a front panel portion of the front case.

The front door has an air suction passage formed at the front of the opening.

The front door has a display window for viewing the water container installed at a position facing the opening.

The blower comprises: a fan motor installed on the rear case; a fan coupled to the fan motor; and a fan housing installed to surround the fan along with the rear case and having a suction unit formed at a front surface portion for passing air sucked into the fan through and a discharge unit formed at an upper portion of the peripheral portion for communicating with the air outlet.

A purification unit supporting portion for supporting the purification unit on the blower and the front case is formed on the purification unit, the blower, and the front case.

The purification unit supporting portion comprises: a left protruding portion protruded on the left side of the purification unit; a right protruding portion formed on the right side of the purification unit; a left mounting portion formed at any one of the blower and the front case so as to place and support the left protruding portion thereon; and a right mounting portion formed at the other one of the blower and the front case so as to place and support the right protruding portion thereon.

The left protruding portion and the right protruding portion are protruded on a lateral upper portion of the purification unit.

A purification unit attaching/detaching portion for elastically attaching or detaching the purification unit to or from the water guide is formed at the purification unit and the water guide.

The purification unit attaching/detaching portion comprises: protruding portions which are formed at any one of the purification unit and the water guide; and elastic hanging portions which are formed at the other one of the purification unit and the water guide and having hanging holes for latching the protruding portions.

The protruding portions are formed on the water guide, and the elastic hanging portions are protruded at a lower part of the purification unit.

### Advantageous Effects

The air conditioner thus-constructed according to the present invention has the merit that the cleanliness and humidify of a room can be adjusted by one air conditioner since the room air is humidified by a humidifying filter after being purified in a purification unit.

The air conditioner according to the present invention has the merit that it is easy to attach and detach the purification unit and the water container since both of the purification unit and the water container can enter and exit through the opening if the opening is exposed by opening the front door.

The air conditioner according to the present invention has the merit that the room air can be sucked and purified more quickly and then humidified because the room air is sucked to the lower air inlet and the air inlet passage of the of the front door.

The air conditioner according to the present invention has the merit that the purification unit can be easily and firmly mounted.

The air conditioner according to the present invention has the merit that the water container is firmly fixed within the air conditioner without being shaken.

The air conditioner according to the present invention has the merit that a shock caused upon mounting the water container is alleviated to thus prevent damage of the water container or the blower.

### Brief Description of Drawings

FIG. 1 is a perspective view of one embodiment of an air conditioner according to the present invention;
FIG. 2 is a transverse cross sectional view when the one embodiment of the air conditioner according to the present invention is operated;
FIG. 3 is a front view when any one of the left and right doors of the one embodiment of the air conditioner according to the present invention is rotated to the side;
FIG. 4 is a front view when both of the left and right doors of the one embodiment of the air conditioner according to the present invention are rotated sideways;
FIG. 5 is a perspective view schematically showing the flow of water of the one embodiment of the air conditioner according to the present invention;
FIG. 6 is an exploded perspective view of the one embodiment of the air conditioner according to the present invention;
FIG. 7 is a vertical cross sectional view when the one embodiment of the air conditioner according to the present invention is operated;

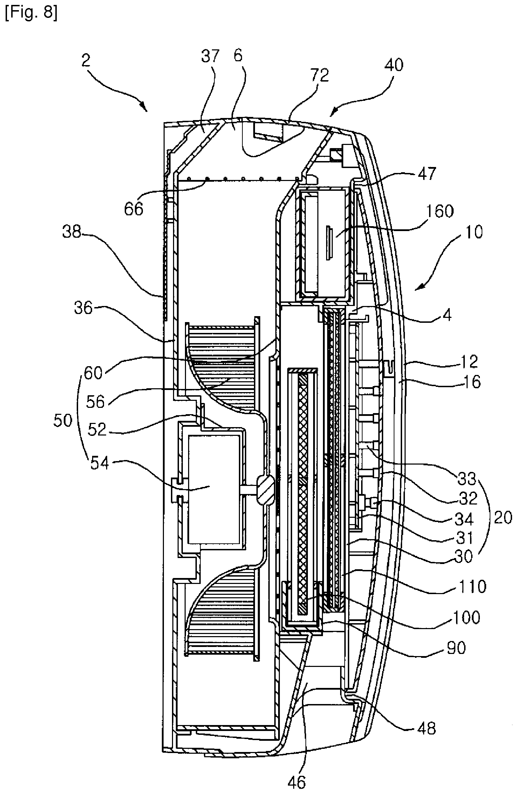

FIG. 8 is a vertical cross sectional view when the one embodiment of the air conditioner according to the present invention is stopped;
FIG. 9 is a perspective view when the water container of the one embodiment of the air conditioner according to the present invention is taken out;
FIG. 10 is a perspective view when the purification unit of the one embodiment of the air conditioner according to the present invention is mounted;
FIG. 11 is a perspective view when the purification unit of the one embodiment of the air conditioner according to the present invention is being detached; and
FIG. 12 is a perspective view when the purification unit of the one embodiment of the air conditioner according to the present invention is separated.

### Best Mode for Carrying out the Invention

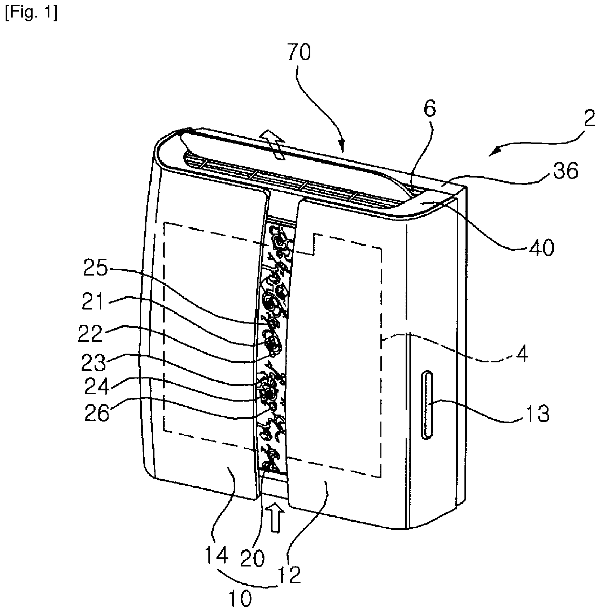

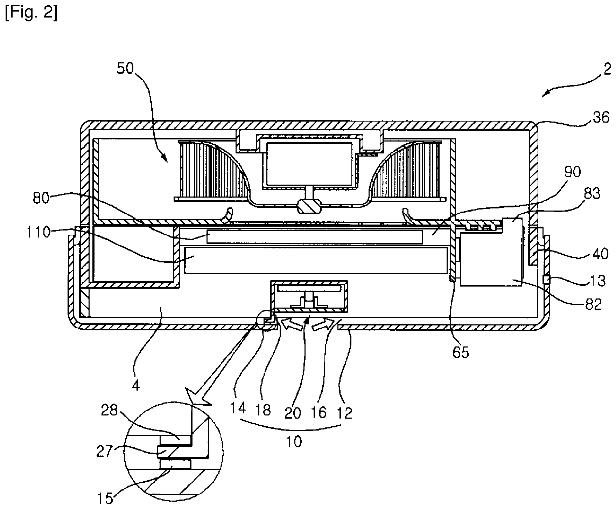

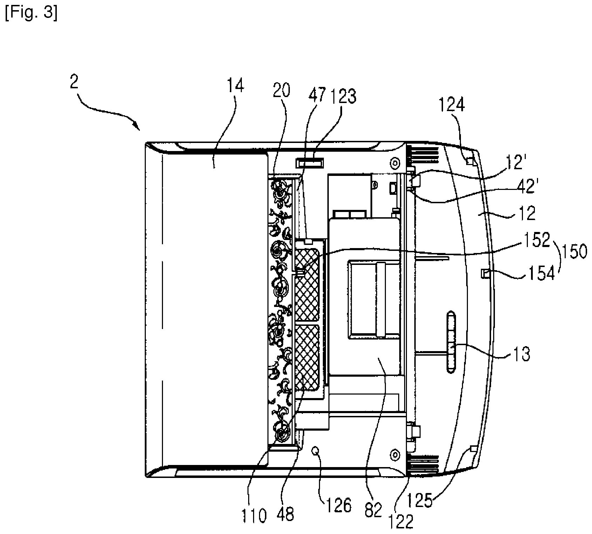

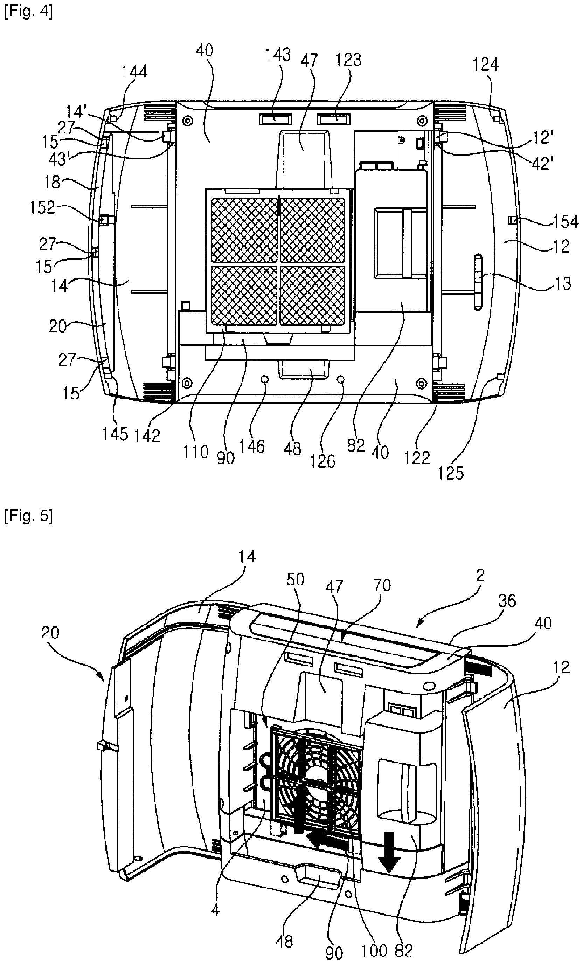

FIG. 1 is a perspective view of one embodiment of an air conditioner according to the present invention. FIG. 2 is a transverse cross sectional view when the one embodiment of the air conditioner according to the present invention is operated. FIG. 3 is a front view when any one of the left and right doors of the one embodiment of the air conditioner according to the present invention is rotated sideways. FIG. 4 is a front view when both of the left and right doors of the one embodiment of the air conditioner according to the present invention are rotated sideways. FIG. 5 is a perspective view schematically showing the flow of water of the one embodiment of the air conditioner according to the present invention.

In the air conditioner according to this embodiment, an opening 4 is formed at a front portion of a main body 2, and an air outlet 6 is formed at at least one of upper, lower, left, and right portions, which are peripheral portions.

A front door 10 is connected to the main body 2 so as to rotate to the front of the opening 4 and cover the opening 4 or so as to rotate to all sides except the front of the opening 4 and expose the opening 4.

The front door 10 is able to cover or expose the opening 4 by rotating to the left and right with respect to a vertical axis, and able to cover or expose the opening 4 by rotating longitudinally with respect to a horizontal axis.

The front door 10 comprises a plurality of doors 12 and 14 rotating in the opposite direction to each other and spaced apart from each other when rotated to the front of the opening 4 and a display 20 installed at one 14 of the plurality of doors 12 and 14, having air suction passages 16 and 18 formed between the display 20 and at least one 12 and 14 of the plurality of doors 12 and 14, and exposed through a gap between the plurality of doors 12 and 14 when the plurality of doors 12 and 14 are all closed.

The front door 10 is formed such that the air suction passages 16 and 18 are located at the front of the opening 4 so as to enable the opening 4 to function as a front air inlet for sucking air through the front of the main body 2.

The left door 12 is installed at the left side of the main body 2 to rotate to the left side so as to cover or expose the left side among the left, right, and central sides of the opening 4.

The right door 14 is installed at the right side of the main body 2 to rotate to the right side so as to cover or expose the right side among the left, right, and central sides of the opening 4.

The display 20 is installed at either the left door 12 or the right door 14 so as to cover the center among the left, right, and center of the opening 4.

The left door 12 and the right door 14 are spaced apart from each other so that the display 20 is exposed through a gap between the left door 12 and the right door 14. The left door 12 is installed to cover the left end of the display 20, and the right door 14 is installed to cover the right end of the display 20.

The display 20 comprises at least one display parts 21, 22, 23, and 24 for displaying information of the air conditioner, a remote control receiving unit 25 for receiving a signal from a remote control, and an operation key 26 for forcibly operating/stopping the air conditioner. At least one of the display parts 21, 22, 23, and 24, the remote control receiving unit 25, and the operation key 26 are spaced apart from one another in a longitudinal direction, and disposed to be exposed through the gap between the left door 12 and the right door 14.

The plurality of display parts 21, 22, 23, and 24 include an operation display part 21, a sleep timer display part 22, a sterilization display part 23, and a water supply notification display part 24.

The display 20 is provided with a display fastening portion 27 to be fastened to either one of the left door 12 and the right door 14, spaced apart therefrom.

The display fastening portion 27 is provided in plural number at the display 20, spaced apart from each other in a longitudinal direction.

The display fastening portion 27 can be fastened by a fastening member, such as a screw, to the door 14 at which the display 20 is installed, and can be suspended and mounted by a hanging part, such as a hook. The following description will be given with respect to a case the display fastening portion 27 is fastened by a fastening member.

The display fastening portion 27 comprises a front and back protruding piece formed at a side portion of the display 20 to protrude forward of the side portion of the display 20 and a lateral protruding piece protruded in a lateral direction at the front end of the front and back protruding piece. The lateral protruding piece has a fastening hole through which the fastening member 29, such as a screw, penetrates.

At the door 14 where the display 20 is to be installed, a fastening portion 15 for fastening the fastening member penetrated through the fastening hole of the lateral protruding piece.

In the case that the display 20 has an air suction passage 18 formed between the display 20 and the door 14 where the display 20 is to be installed, the display fastening portion 26 is formed at a length for separating the display 20 and the door 14 where the display 20 from each other.

The main body 2 comprises a rear case 36 and a front case 40 disposed at the front of the rear case 36, and having the opening 4 formed at a front portion and the air outlet 6 formed at an upper surface portion.

At the main body 2, disposed are a blower 50 for sucking room air into the main body 2 and discharging it through the air outlet 6, a wind direction adjusting mechanism 70 for adjusting the wind direction of the air discharged to the air outlet 6 from the blower 50, a water container 82 containing water, a water guide 90 containing the water flown from the water container 82, a humidifying filter 100 mounted on the water guide so as to supply moisture to air flowing toward the blower 50, and a purification unit 110 for purifying the air flowing toward the humidifying filter 100.

In the air conditioner according to this embodiment, among the water container 82, the water guide 90, the humidifying filter 100, and the purification unit 110, especially, the water container 82 and the purification unit 110 have a large number of times of attaching and detaching, and the water container 82 and the purification unit 100 are disposed left and right at a rear position of the opening 4, which is an inner position of the main body 2 and taken in and out through the opening 4 in the front-back direction.

In the main body 2, the lateral width of the opening 4 is larger than the sum of the lateral width of the purification unit 110 and the lateral width of the water container 82, and the height of the opening 4 is larger than the height of the purification unit 110 and the height of the water container 82.

Meanwhile, when the water container 82 is taken in, one of the left door 12 and the right door 14 is rotated sideways to open a part of the opening 4 at the front of the water container 82, and when the purification unit 110 is taken in, the left door 12, the right door 14, and the display 20 open the entire part of the opening 4.

A left hinge axis 42' is formed at any one of the left door 12 and the front case 40, and a left hinge hanger 12' is formed at the other one and rotatably connected to the left hinge axis 42'.

A right hinge axis 43' is formed at any one of the right door 14 and the front case 40, and a right hinge hanger 14' is formed at the other one and rotatably connected to the right hinge axis 43'.

Meanwhile, a display window 13 for viewing the water container 82 is installed at a position facing the opening 4 at the door 12 covering the water container 82 in a state that the door 12 is not opened.

The display window 13 helps to check the presence or not of the water container 82 or the water level in the water container 82 when the door 12 covering the water container 82 is rotated to the front of the front case 40. The display window 13 is formed transparently or semi-transparently, and installed at a position facing the water container 82 at the door 12 covering the water container 82.

The display 20 is installed at the door 14, rather than the door 12 covering the water container 82, such that the left door 12 and the right door 14 are not rotated when the water container 82 is taken in, but rotated only when the purification unit 110 is taken in.

Hereinafter, in the air conditioner according to this embodiment, the water container 82 is taken in and out through the left side of the opening 4, the left door 12 covers or exposes the front of the water container 82 and part of the front of the purification unit 110 as the left side of the opening 4 is opened and closed, the purification unit 110 is taken in and out through the right side and center of the opening 4, and the right door 14 and the display 20 covers or exposes a part of the purification unit 110 not covered or exposed by the left door 12 as the right side and center of the opening 4 are opened and closed.

Meanwhile, at the main body 20, particularly, the front case 40, there are formed a left stopper 122 for restricting excessive rotation of the left door 12 when the left door 12 is rotated to the left side and a right stopper 142 for restricting excessive rotation of the right door 14 when the right door 14 is rotated to the right side.

The left stopper 122 is protruded from the main body 2, particularly, the front case 40, so that the left door 12 is stopped when the left door 12 rotates at 90° at a position covering the left side of the opening 4.

The air conditioner according to this embodiment further comprises a door closed state keeping mechanism for keeping the front door 10 closed at the main body 20, particularly, the front case 40, a door drooping prevention mechanism for preventing the drooping of the front door 10, and a door opening detection mechanism 150 for detecting the opening of the front door 10.

The door closed state keeping mechanism comprises a left magnet 123 installed at a position covered by the left door 12 at the front case 40, a left magnetic body 124 installed at the left door 12 and applying an attractive force to the left magnet 123, a right magnet 143 installed at a position covered by the right door 14 at the front case 40, and a right magnetic body 144 installed at the right door 14 and applying an attractive force to the right magnet 143.

The door drooping prevention unit comprises projections 125 and 145 protruded on the left door 12 and the right door 14 and projection insertion grooves 126 and 146 formed at the main body 2, particularly, the front case 40, for inserting and engaging the projections 125 and 145.

A drooping prevention unit is formed.

The door opening detection mechanism 150 comprises a hole sensor 152 installed at the display 20 and a magnet 154 installed at the door 12, rather than the door 14 where the display 20 is installed facing the hole sensor 152.

The hole sensor 152 is connected to a display PCB 31 of the display 20 described later by a lead wire.

The hole sensor 152 is installed to protrude laterally at a side of the display 20.

The magnet 154 is installed to be located at the front of the hole sensor 152 when the door 12, rather than the door 14 where the display 20 is installed, is closed.

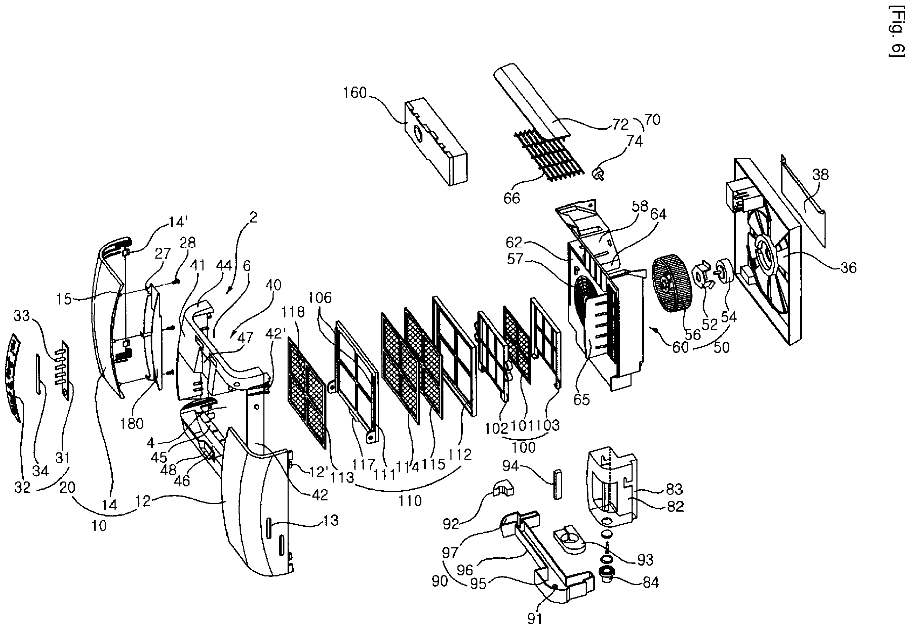

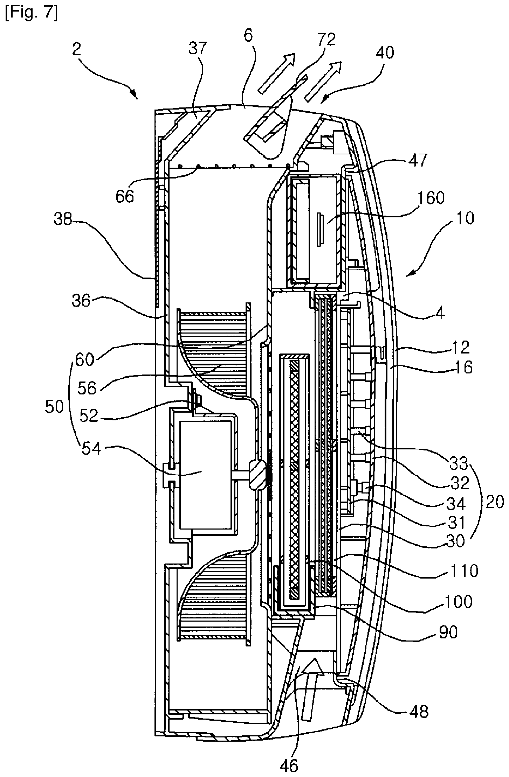

FIG. 5 is an exploded perspective view of the one embodiment of the air conditioner according to the present invention. FIG. 6 is a vertical cross sectional view when the one embodiment of the air conditioner according to the present invention is operated. FIG. 7 is a vertical cross sectional view when the one embodiment of the air conditioner according to the present invention is stopped.

The display 20 comprises a display case 30 whose front surface is opened, a display PCB 31 disposed to be inserted into the PCB case 30, and a display panel 32 installed to cover the display case 30 for protecting the display PCB 31, and forming the front appearance of the display 20.

At the display PCB31, a receiving unit communicating with a remote control, a plurality of LEDs 33 emitting light, and a switch for switching operation are installed.

At the display panel 32, a light transmission unit for transmitting light of the LEDs 33 is formed at each of the plurality of LEDs 33, a transmission unit through which a signal sent from the remote control is formed at the front of the receiving unit, and a pressing part for switching the switch is formed at the front of the switch.

That is to say, in the display 20, the LEDs 33 and the light transmission unit at the front of the LEDs 33 constitute the display parts 21 to 24, the receiving unit and the transmission unit at the front of the receiving unit constitute the remote control receiving unit 25, and the switch and the pressing part constitute the operation key 26.

The display 20 further comprises a light guide 34 for guiding light irradiated from the LEDs 33 and protecting the LEDs 33.

The light guide 34 is installed on the back surface of the display panel 32 or at the display PCB 31.

The rear case 36 forms the outer appearance of the rear portion of the air conditioner, and may be formed in the shape of a plate body or may be formed in the shape of a box whose front surface is opened. Preferably, the rear case 36 is formed in the shape of a box having a space between the rear case 36 and the front case 40.

In the rear case 36, as shown in Figs. 6 and 7, a hanging groove 37 is formed between an upper panel portion and a rear panel portion, and the hanging groove 37 is placed and installed on a mounter 38 fastened to a wall by a fastening member, such as a screw.

The front case 40 forms the outer appearance of the front portion of the air conditioner, whose rear surface is formed in an opened box shape.

In the front case 40, the opening 4 may be formed across at least one of the front panel portion 41 and left and right portions 42 and 43 of the front case 40, and the opening 4 may be formed opened in the front-back direction only on the front panel portion 43 of the front case 40. The following description will be made with respect to a case where the opening 4 is formed across one of the front panel portion 41 and left and right panel portions 42 and 43 of the front case 40 so as to make it easier to insert and take in and out the water container 82 and the purification unit 110.

In the front case 40, the opening 4 is formed to be opened from the front panel portion 41 until one side panel portion 42 adjacent to the water container 82 among the left and right panel portions 42 and 43 so as to make the user easily hold the water container by hand.

In the front case 40, the opening 4 comprises a front opening formed longitudinally left and right at the front panel portion 41 and a side opening extending to the front opening and formed longitudinally up and down at one side panel portion 42 to expose part of the sides of the water container 82.

In the front case 40, the opening 4 may function as a kind of a front suction port for sucking air sucked to the air suction passages 16 and 18 of the front door 10 into the main body 2, and the opening may function as an entrance/exit for enabling the purification unit 110 and the water container 82 to enter and exit. The following description will be made with respect to a case where the opening 4 functions as both of the front air inlet and the entrance/exit.

In the front case 40, the size of the opening 4 is smaller than the size of the front portion of the front door 10 at the rear of the front door 10.

In the front case 40, the air outlet 6 is formed at the upper panel portion 44 to be opened in an up-and-down direction, and a lower air inlet 46 for sucking air from the lower side of the front case 40 into the front case 40 is formed at a lower portion 45 to be opened in an up-and-down direction.

In the front case 40, the air outlet 6 is formed to be opened in an up-and-down direction at a rear upper side of the opening 4, and the lower air inlet 46 is formed to be opened in an up-and-down direction at a rear lower side of the opening 4.

In the air conditioner according to this embodiment, display insertion portions 47 and 48 for inserting the display 20 therein are recessed on the main body 2, particularly, the front case 40, so that, when the left door 12 and the right door 12 are closed, the left door 12 and the right door 14 are disposed as close as possible to the front case 40 and the air suction passages 16 and 18 are formed between the left door 12 and right door 14 and the display 20.

The blower 50 is a centrifugal fan which is installed within the main body 2 and sucks air at the front and then blows the air to the peripheries, and comprises a fan motor 54 installed on the rear case 36 by a motor mounter 52, a fan 56 installed on a rotary axis of the fan motor 54, and a fan housing 60 disposed to surround the fan motor 54 and the fan 56 along with the rear case 36 and having a suction unit 57 formed at a front surface portion and a discharge unit 58 formed at an upper portion.

The fan housing 60 comprises a front panel portion 62 having the suction unit 57 formed thereon and a peripheral portion 64 protruded rearward on the back surface of the front panel portion.

In the fan housing 60, a grille is formed at the suction unit 57.

In the fan housing 60, a scroll portion is formed on the peripheral portion 64.

The blower 50 is installed to have a space which is formed between the rear case 36 and the front case 40 for inserting and receiving a protruding portion 83 of the water container 82 to be described later.

In the fan housing 60, the front panel portion 62 is spaced apart from the rear case 36 and the front case 40, particularly, by a gap slightly larger than the lateral width of the protruding portion 82 of the water container 80.

The fan housing 60 has a partition wall which is protruded for partitioning the front of the fan housing 60 into a space through which air passes and a space in which the water container is located.

In the fan housing 60, a safety net 66 is disposed at the discharge unit 58.

The wind direction adjusting mechanism 70 comprises a discharge vane 72 disposed at the discharge unit 58 of the fan housing 60 so as to be rotatable up and down with respect to a horizontal axis and a vane motor 74 installed at the discharge unit 58 of the fan housing 60 so as to rotate the discharge vane 72.

The water container 82 provides moisture to be contained in the humidifying filter 100, is formed in such a shape as to contain as large an amount of water as possible, and has the protruding portion 83 protruded rearward at one of the left and right sides so as to be made compact and contain as large an amount of water as possible.

In the water container 82, the protruding portion 82 is installed to be inserted between at least one of the rear case 36 and the front case 40 and the front panel portion 62 of the fan housing 60.

The water container 82 has a hole part through which water enters and exits, and the hole part has a cap 84 disposed thereon to control water.

The cap 84 has a flow passage through which water passes, and a valve body is disposed to be movable to the cap 84 so as to open and close the flow passage.

As for the cap 84, when the water container 82 is mounted on the water guide 90, the valve body is moved inwardly of the water container 82 or moved outwardly of the water container 82 by the water guide 90 or a water softening filter 93 to be described later, thereby opening the flow passage of the cap 82.

The water container 82 is placed and mounted on the water guide 90, and a structure about the installation of the water container 82 will be described in detail later.

The water guide 90 is opened at the upper surface so that the water container 82 and the humidifying filter 100 are mounted thereon, and has a water passage through which water drained from the water container 82 flows.

The water guide 90 has a projection 91 for moving the valve body so as to open the flow passage of the cap 84 when the water container 82 is placed on the water guide 90.

The air conditioner according to this embodiment comprises a water level detecting sensor 92 for detecting the water level of the flow passage of the water guide 90, a water softening filter 93 for softening the water drained from the water container 82, and a water sterilizer 94 for sterilizing the water of the water guide 90.

The water level detection sensor 92 is for detecting a water level so as to notify of the time point of water supply, and comprises a float which is buoyant by the water and whose height is varied according to the water level and a sensor installed at an upper portion of the water guide 90 or the fan housing 60 of the blower 50 so as to be switched by the float.

The water softening filter 93 is an ion purification resin filter which is made of plastic resin using a polystyren compound and substitutes ions coated on the resin surface by Ca and Mg determining the hardness of water and reduces the hardness of hard water, thus softening the hard water. The water softening filter 93 is disposed to be located at a lower side of the water container 82 when the water container 82 is mounted on the water guide 90 so that the water drained from the water container 82 flows to the humidifying filter along the water guide 90 after being softened, and has a ring-shaped space on the inner periphery so that the entire or some part of the cap 84 is inserted and latched.

The water sterilizer 94 sterilizes the water by a discharge electrode causing a discharge in the water and producing H₂O₂. When the water guide 90 is taken out or mounted through the opening 4 for the purpose of a service such as cleaning, the water sterilizer 94 is rotated by the water guide 90 to thus enable the attaching and detaching of the water guide 90, and the upper portion thereof is disposed on the fan housing 60 to rotate with respect to a horizontal axis so that the water sterilizer 94 is protruded to the inside of the water guide 90 upon mounting the water guide 90 to make the discharge electrode sink in the water.

The water guide 90 comprises a water container mounting portion 95 having the water container mounted thereon and the softening filter 93 disposed therewithin and a flow passage portion 96 extending from the water container mounting portion 95, disposed longitudinally left and right at a front lower side of the fan housing 60, and having the humidifying filter 100 mounted thereon.

The water guide 90 comprises a water level detection sensor installation unit 97 extending from one of the water container mounting portio 95 and the flow passage portion 96 and having the water level detection sensor 91 disposed thereon.

The humidifying filter 100 comprises a filter member 101 for absorbing and hydrating the water of the water guide 90 and filter cases 102 and 103 for protecting the filter member 101, and the filter cases 102 and 103 comprise a front filter case 102 having a front grille formed thereon and a rear filter case 103 having a rear grille formed thereon.

The humidifying filter 100 is placed on the flow passage portion 96 of the water guide 90 so that the lower portion of the filter member 101 is located at the flow passage portion 96 of the water guide 90.

The purification unit 110 is installed to be located between the opening 4 and the humidifying filter 100, and comprises filter cases 111 and 112 and a plurality of filters 113, 114, and 115.

The filter cases 111 and 112 comprise a front filter case 111 having a front grille formed thereon and a rear filter case 112 having a rear grille formed thereon.

In the filter cases 111 and 112, a front sliding guide 116 for vertically slidably attaching and detaching part of the filters 113, 114, and 115 is formed on the front surface of the front filter case 111.

The front sliding guide 116 is vertically and longitudinally formed at the left and right sides of the front surface of the front filter case 111.

A handle 117 is protruded on the lower ends of the filter cases 111 and 112.

The plurality of filters 113, 114, and 115 comprises at least a plurality of filters among a prefilter for filtering impurities in air, a hepa filter for filtering fine impurities in air, an electric precipitation filter for ionizing the fine impurities in the air by electricity and collecting them, an allergy filter for eliminating allergies, such as an Ag allershield filter, and a deodorization filter for eliminating odors, such as an active plate filter or a photocatalytic deodorization filter. The following description will be made with respect to a case where the plurality of filters 113, 114, and 115 comprise a prefilter 113, an allergy filter 114, and a deodorization filter 115.

The prefilter 113 is attached to or detached from the front surface of the front filter case 111 by the front sliding guide 106.

The allergy filter 114 and the deodorization filter 115 are located inside the front filter case 111 and the rear filter case 112 so as to be protected by the front filter case 111 and the rear filter case 112.

The purification unit 110 is installed to enter and exit through the opening 4, with the plurality of filters 113, 114, and 115 integrated with each other, and is located between the fan housing 60 of the blower 50 and the opening 4 within the main body 2.

The purification unit 110 is installed between the front panel portion 62 of the fan housing 60 and the upper side of the lower air inlet 46 so that the air sucked into the lower air inlet 46 is combined with the air sequentially passed through the air suction passages 16 and 18 and the opening 4 and passes through the purification unit 110. A structure about the installation of the purification unit 110 will be described in detail later.

The air conditioner according to this embodiment further comprises a controller 160 installed to be located within the main body 2.

The controller 160 controls the display 20 according a detection result of the water level detection sensor 92, and controls the fan motor 54, the vane motor 74, and the water sterilizer 94 according to the manipulation of the remote control or the operation key 26 and a detection result of the door opening detection mechanism 150.

Hereinafter, the operation of the present invention thus-constructed will be described below.

First, when an operation command is inputted through the remote control or the operation key 26, the display unit 20 outputs a detection result of the hole sensor 152 and a signal generated upon inputting the operation command to the controller 160. When an operation command is inputted and the hole sensor 152 detects the closing of a door, the controller 160 drives the fan motor 54 and drives the vane motor 74 of the wind direction adjusting mechanism 70 in an open mode.

Upon driving the vane motor 74 in the open mode, the discharge vane 72 is disposed to open the air outlet 6 and guide the wind direction of the air discharged to the air outlet 6.

When the fan motor 54 is driven, the fan 56 is rotated, the air at the front of the front door 10 in a room passes through the air suction passage 16 between the left door 12 and the display 20 and the air suction passage 18 between the right door 14 and the display 20, is sucked into the rear of the front door 10, and then passes through the opening 4.

The air passed through the opening 4 is purified as it passes through the purification unit 110, and thereafter receives moisture from the humidifying filter 100 as it passes through the humidifying filter 100.

The air that has been purified and received moisture by natural evaporation is introduced into the blower 50 and discharged to the discharge unit 58, and discharged to the room while being guided by the discharge vane 72.

Meanwhile, during the above operation, the controller 160 drives the water sterilizer 94, the water sterilizer 94 sterilizes the water of the water guide 90, the water of the water container 82 is softened by the softening filter 93 and sterilized, flows to the humidifying filter 100, and then is absorbed into the humidifying filter 100. The humidifying filter 100 continuously supplies moisture to the air by natural evaporation using the air passed through the purification unit 110.

Further, during the above operation, the water level detection sensor 92 detects a water level and outputs it to the controller 160, if the water level of the water level detection sensor 92 is less than a set value, the controller 160 detects the absence of water in the water guide 90 and outputs an out-of-water signal to the display 20, and the display 20 notifies the outside of the absence of water in the water container 82 by turning on the water supply notification display part 24.

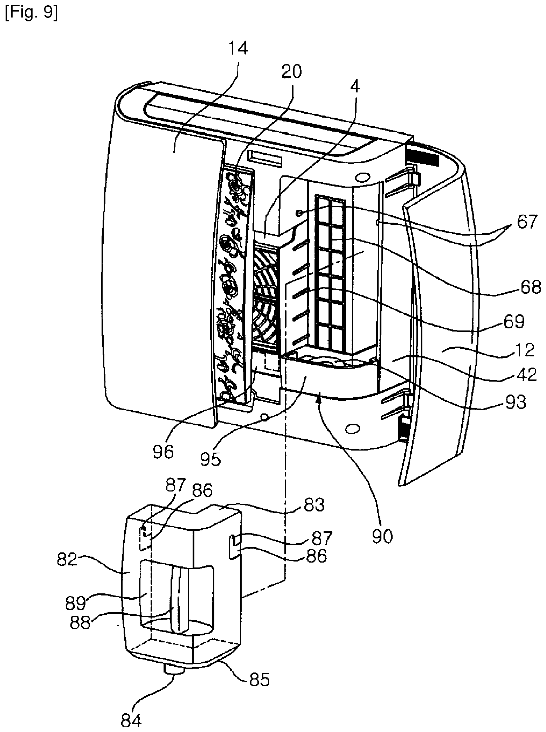

FIG. 9 is a perspective view when the water container of the one embodiment of the air conditioner according to the present invention is taken out.

The water container 82 is installed to be disposed at a position exposed to the outside through the opening 4 when the door 12 located at the front thereof is rotated sideways.

The water container 82 is placed on the upper end of the water container mounting portion 95 of the water guide 90. A mounting portion 85 to be placed on the upper end of the water mounting portion 95 is formed concave along the edge of the lower panel portion of the water container 82.

The water container 82 is installed such that the cap 84 is latched at one of the water softening filter 93 and the water guide 90. When the water container 82 is mounted on the water container mounting portion 95, the entire or some part of the cap 84 is latched at the water softening filter 93.

A left panel portion and a right panel portion of the water container 82 are inserted between the partition wall 65 of the fan housing 60 and one side panel portion 42 of the front case 40. They are formed to be inserted aslant upon mounting and removed aslant upon taking out.

The front case 40 has a projection 67 protruded sideways for guiding the water container 82 to bs inserted or taken out aslant, and a guide recess portion 86 is formed recessed at the left and right panel portions, respectively, of the water container 82, for guiding the insertion/taking-out of the water container 82 while being guided by the projection 67 upon attaching and detaching the water container 82.

Here, the guide recess portion 86 is opened at rear portion to allow the projection 67 to enter through the rear portion of the guide recess portion 86, and a latch groove portion 87 in which the projection 67 is inserted and latched in the front-back direction and an upward direction is formed at the front portion thereof to communicate with the guide recess portion 86.

The water container 82 has a handle 88 formed at a front part, and a handle recess portion 89 formed around the handle 88 to accommodate the user's hand.

Meanwhile, the blower 50, particularly, the fan housing 60, has ribs 68 and 69 protruded on a surface facing the water container 82, for supporting the water container 82 while in contact with the water container 82 upon mounting the water container 82.

The ribs 68 and 69 buffers to prevent the water container 82 from applying a shock to the fan housing 82 upon mounting the water container 82 and reinforces the strength of the circumference of the water container 82 of the fan housing 82, and the ribs 68 and 69 are formed to support the water container 82 so that the water container 82 is prevented from surface-contacting the fan housing 82.

The ribs 68 and 69 comprise a plurality of front ribs 68 formed vertically and laterally at the rear of the water container 82 in the front panel portion 62 of the fan housing 60 so as to be in contact with the water container 82 and a plurality of side ribs 69 formed vertically or in the front-back direction at the side of the water container 82 in the partition wall 65 so as to be in contact with the water container 82.

Hereinafter, the attachment and detachment operation of the water container 82 will be described in detail.

In the air conditioner described above, upon taking out the water container 82, the user or the like rotates the door 12 located at the front of the water container 82 sideways. The water container 82 is exposed to the outside through the opening 4.

If the user or the like puts their hand in the opening 4 and lifts the water container 82 to a predetermined height, holding the front part, especially, the handle 88, of the water container 82, the cap 84 of the water container 82 is released from the water softening filter 93 and the latch groove portion 87 thereof is released from the projection 67.

Thereafter, if the water container 82 is pulled forward and upward while rotating it aslant forward, the water container 82 is removed aslant from between the one side panel portion 42 of the front case 40 and the partition wall 65 by being guided by the projection 67 and is taken out through the opening 4.

On the other hand, upon mounting the water container 82, if the user or the like locates the water container 82 at a front upper position of the water guide 90 and then pushes the water container 82 slant between the one side panel portion 42 of the front case 40 and the partition wall 65, the guide groove portion 86 guides the insertion of the water container 82 by being guided by the projection 67.

When the water container 82 is vertically raised and then lowered in a downward direction, both side parts of the upper portion of the water container 82 are latched as the latch groove portion 87 is latched. At this time, the mounting portion 85 of the water container 82 is placed on the upper end of the water container mounting portion 95, and the entire or some part of the cap 84 is latched at the water softening filter 93.

That is to say, the water container 82 is stably fixed since the latch groove portion 87, the mounting portion 85, and the cap 84 are all fixed.

Afterwards, when the door 12, opened upon taking out the water container 82, is closed, the door 12 protects the water container 82 while covering part of the opening 4.

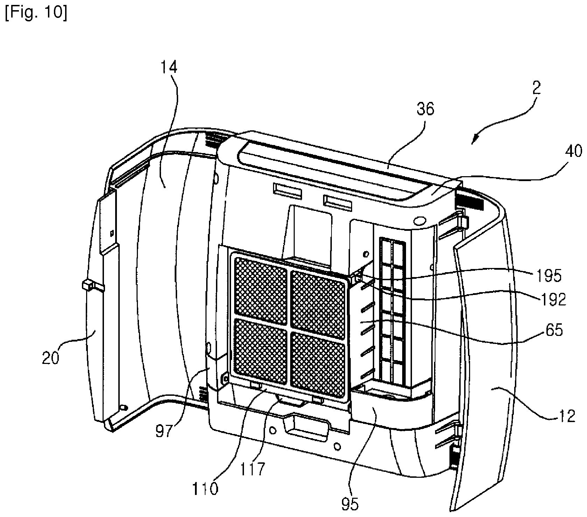

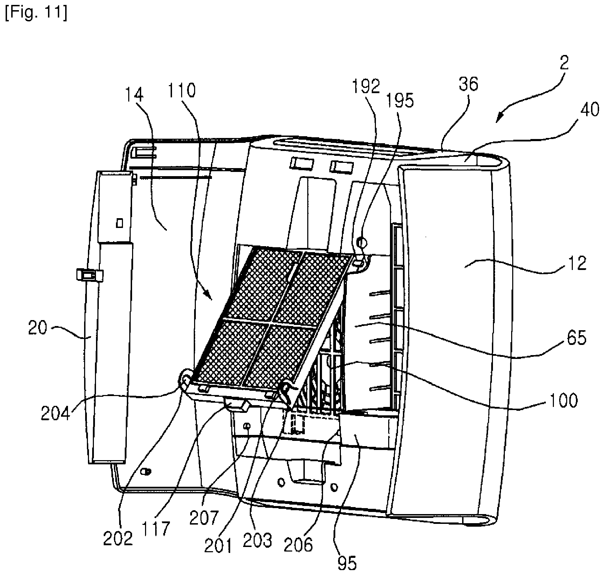

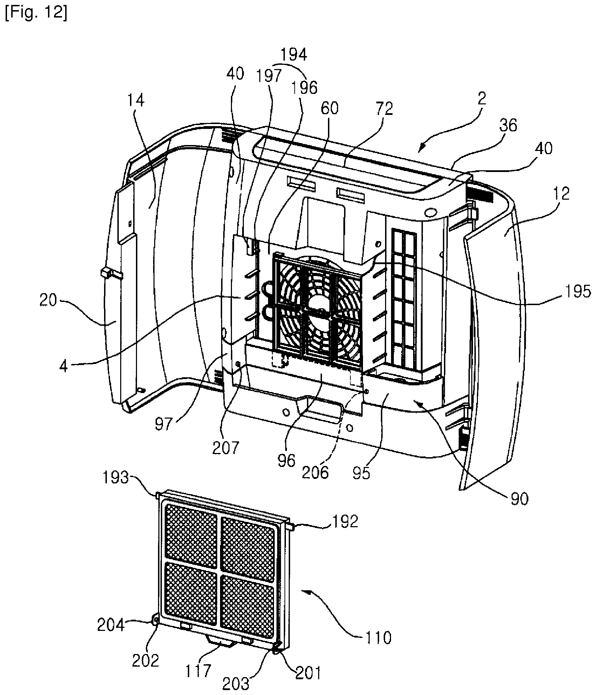

FIG. 10 is a perspective view when the purification unit of the one embodiment of the air conditioner according to the present invention is mounted. FIG. 11 is a perspective view when the purification unit of the one embodiment of the air conditioner according to the present invention is being detached. FIG. 12 is a perspective view when the purification unit of the one embodiment of the air conditioner according to the present invention is separated.

As shown in FIGs. 10 to 12, one of the upper and lower portions of the purification unit 110 is supported on at least one of the front case 40 and the blower 50, and the other one thereof is elastically attached to and detached from one of the front case 40, the blower 50, and the water guide 90.

The following description will be made with respect to a case where the upper portion of the purification unit 110 is supported on the front case 40 and the blower 50, and the lower portion thereof is elastically attached to or detached from the water guide 90. A purification unit supporting portion 190 for supporting the purification unit 110 on the front case 40 and the blower 50 is formed at the front case 40, the blower 50, and the purification unit 110, and a purification unit attaching/detaching portion 200 for attaching or detaching the purification unit 110 to or from the water guide 90 is formed at the purification unit 110 and the water guide 90.

The purification unit supporting portion 190 comprises protruding portions 192 and 193 protruded on both sides of the purification unit 110 and mounting portions 194 and 195 formed on the fan housing 60 and the front case 40 so as to place and support the protruding portions 192 and 193 thereon.

The protruding portions 192 and 193 comprise a left protruding portion 192 protruded at the left side of the purification unit 110 and a right protruding portion 193 protruded at the right side of the purification unit 110.

The protruding portions 192 and 193 may be constructed of a rotary axis protruded in a cylindrical shape on a lateral upper portion of the purification unit 110, or may be constructed of ribs protruding in a rectangular plate body shape.

The left protruding portion 192 is protruded sideways on the upper portion of the left side surface of the purification unit 110, and the right protruding portion 193 is protruded sideways on the upper portion of the right side surface of the purification unit 110.

The mounting portions 194 and 195 are formed on the fan housing 60 or the front case 40, and comprise a lateral access mounting portion 194 in which one 193 of the left protruding portion 192 and the right protruding portion 193 is inserted and lifted from a side in a lateral direction and taken out in the opposite direction and a front-back access mounting portion 195 in which the other one 192 of the left protruding portion 192 and the right protruding portion 193 is inserted and lifted in a rearward direction and taken out in a forward direction.

The lateral access mounting portion 194 is a right mounting portion which is formed protruded sideways on the front case 40 and allows the right protruding portion 193 to be located between the fan housing 60 and the lateral access mounting portion 194, and comprises a lower panel portion 196 for lifting the right protruding portion 193 and a front panel portion 197 for restricting the right protruding portion 193 from being removed forward.

The front-back access mounting portion 195 is a right mounting portion which is formed recessed on an upper part of the partition wall 65 and allows the left protruding portion 192 to be located between the partition wall 65 and the front case 40, and is comprised of a groove portion formed on the upper part of the partition wall 65 of the fan housing 60, whose front end is opened and whose rear end is blocked.

The purification unit attaching/detaching portion 200 comprises elastic hanging portions 203 and 204 having hanging holes 201 and 202 which are formed at any one of the purification unit 110 and the water guide 90 and latching bosses 206 and 207 which are formed at the other one of the purification unit 110 and the water guide 90 so as to be latched on the elastic hanging portions 203 and 204.

The elastic hanging portions 203 and 204 are protruding pieces which are protruded forward from both sides of the lower part of the purification unit 110 so as to be elastically bent or restored, and are formed such that the hanging holes 201 and 202 are opened in a lateral direction to allow the latching bosses 206 and 207 to be inserted and latched from a side.

The latching bosses 206 and 207 are protruded in a lateral direction from the water guide 90 so that they are elastically deformed as the elastic hanging portions 203 and 204 slide on the latching bosses 206 and 207 and they are inserted into the hanging holes 201 and 202 of the elastic hanging portions 203 and 204 to restrict arbitrary movement of the elastic hanging portions 203 and 204.

In the water guide 90, the water container mounting portion 95 and the water level detection sensor installation unit 97 are protruded forwardly of the flow passage portion 96, and a forward protruding portion of the water mounting portion 95 and a forward protruding portion of the water level detection sensor installation unit 97 are spaced apart by a gap slightly larger than the lateral width of the purification unit 100, and the latching bosses 206 and 207 are protruded, respectively, on a surface facing the water level detection sensor installation unit 97 of the water container mounting portion 85 and a surface facing the water container mounting portion 85 of the water level detection sensor installation unit 97.

Hereinafter, the attaching/detaching operation of the purification unit 110 will be described in detail.

As stated above, in the air conditioner, upon taking out the purification unit 110, the user or the like rotates the door 12 located at the front of the water container and the door 20 with the display 20 installed thereon in the opposite direction. At this time, the purification unit 110 is exposed to the outside through the opening 4.

When the user or the like puts their hand in the opening 4 and lifts the purification unit 110, holding the handle 117 of the purification unit 110, the purification unit 110 slides on the latching bosses 206 and 207 as the elastic hanging portions 203 and 204 are elastically bent and released from the latching bosses 206 and 207.

Thereafter, when the purification unit 110 is pulled forward by turning it aslant to the sides, one 193 of the left protruding portion 192 and the right protruding portion 193 is taken out from the lateral access mounting portion 194 and the other one 192 of the left protruding portion 192 and the right protruding portion 193 is taken out from the front-back mounting portion 195, and the purification unit 110 is taken out through the opening 4.

On the other hand, upon mounting the purification unit 110, when the user or the like inserts one 193 of the left protruding portion 192 and the right protruding portion 193 into the lateral access mounting portion 194 and inserts the other one 192 of the left protruding portion 192 and the right protruding portion 193 into the front-back mounting portion 195, the purification unit 110 is supported on the front case 40 and the fan housing 60.

Afterwards, when the lower portion of the purification unit 110 is pushed between the water container mounting portion 95 of the water guide 90 and the water level detection sensor installation unit 97, the purification unit 110 slides on the latching bosses 206 and 207 as the elastic hanging portions 203 and 204 are elastically bent. Thereafter, when the latching bosses 206 and 207 are inserted into the hanging holes 201 and 202 of the elastic hanging portions 203 and 204, the elastic hanging portions 203 and 204 are restored to the original shape and latched at the protruding portions 206 and 20, and the purification unit 110 is fixed.

Thereafter, when the doors 12 and 14, opened upon taking out the water container 110, are closed, the plurality of doors 12 and 14 and the display 20 protect the purification unit 110 while covering the entire part of the opening 4.

### Industrial Applicability

Humidification and purification can be performed in one apparatus, and it is easy to attach and detach the water container and the purification unit since the water container and the purification unit can enter and exit through one opening after the front door is opened.

## Claims

1. An air conditioner, comprising:
a main body (2) having an air outlet (6) and having an opening (4) formed at the front thereof;
a front door (10) installed to cover or expose the opening (4);
a blower (50) installed on the main body (2);
a water container (82) containing water, and disposed to let the water in and out through the opening (4);
a water guide (90) installed within the main body (2) so as to contain the water flown from the water container (82);
a humidifying filter (100) mounted on the water guide (90) so as to supply moisture to air flowing toward the blower (50); and
a purification unit (110) disposed to purify the air flowing toward the humidifying filter (100) and let the water in and out through the opening (4),
wherein the lateral width of the opening (4) is larger than the sum of the lateral width of the purification unit (110) and the lateral width of the water container (82), and the height of the opening (4) is larger than the height of the purification unit (110) and the height of the water container (82), and the blower (50) has a partition wall (65) which is protruded for partitioning the front of the fan housing (60) into a space through which air passes and a space in which the water container (82) is located, **characterized in that**
the blower (50) has ribs (68, 69) contacting the water container (82) which are protruded on a surface facing the water container (82).

2. The air conditioner of claim 1, wherein the water container (82) and the purification unit (110) are disposed to be located left and right within the main body (2).

3. The air conditioner of claim 1, wherein the ribs (68, 69) comprise front ribs (68) formed to bring the water container (82) into contact with a front panel portion (62) of the blower (50) and side ribs (69) formed to bring the water container (82) into contact with the partition wall (65).

4. The air conditioner of claim 1, wherein the main body (2) has a rear case (36) and a front case (40) which is disposed at the front of the rear case and has the opening (4) formed at a front portion and the air outlet (6) formed at an upper surface portion.

5. The air conditioner of claim 4, wherein the front case (40) has a lower air inlet (46) formed at a lower portion (45).

6. The air conditioner of claim 5, wherein the lower air inlet (46) is formed to be opened longitudinally at a lower side between the opening (4) and the water guide (90).

7. The air conditioner of claim 4, wherein the opening (4) is formed at one side panel portion (42) close to the water container (82) among left and right panel portions of the front case (40) and a front panel portion of the front case (40).

8. The air conditioner of claim 7, wherein the front door (10) has an air suction passage (18) formed at the front of the opening (4).

9. The air conditioner of claim 7, wherein the front door (10) has a display window (13) for viewing the water container (82) installed at a position facing the opening (4).

10. The air conditioner of claim 4, wherein the blower (50) comprises:
a fan motor (54) installed on the rear case (36);
a fan (56) coupled to the fan motor (54); and
a fan housing (60) installed to surround the fan (56) along with the rear case (36) and having a suction unit (57) formed at a front surface portion for passing air sucked into the fan (56) through and a discharge unit (58) formed at an upper portion of the peripheral portion for communicating with the air outlet (6).

11. The air conditioner of claim 4, wherein a purification unit supporting portion (190) for supporting the purification unit (110) on the blower (50) and the front case (40) is formed on the purification unit (110), the blower (50), and the front case (40).

12. The air conditioner of claim 11, wherein the purification unit supporting portion (190) comprises:
a left protruding portion (192) protruded on the left side of the purification unit (110);
a right protruding portion (193) formed on the right side of the purification unit (110);
a left mounting portion (194) formed at any one of the blower (50) and the front case (40) so as to place and support the left protruding portion (192) thereon; and
a right mounting portion (195) formed at the other one of the blower (50) and the front case (40) so as to place and support the right protruding portion (193) thereon.

13. The air conditioner of claim 4, wherein a purification unit attaching/detaching portion (200) for elastically attaching or detaching the purification unit (110) to or from the water guide (90) is formed at the purification unit (110) and the water guide (90).

14. The air conditioner of claim 13, wherein the purification unit attaching/detaching portion (200) comprises:
protruding portions (206, 207) which are formed at any one of the purification unit (110) and the water guide (90); and
elastic hanging portions (203, 204) which are formed at the other one of the purification unit (110) and the water guide (90) and having hanging holes (201, 202) for latching the protruding portions (206, 207).

## Patentansprüche

1. Klimaanlage, die aufweist:
einen Hauptkörper (2) mit einem Luftauslass (6) und einer Öffnung (4), die an seiner Vorderseite ausgebildet ist;
eine Frontklappe (10), die installiert ist, um die Öffnung (4) zu bedecken oder freizulegen;
ein Gebläse (50), das auf dem Hauptkörper (2) installiert ist;
einen Wasserbehälter (82), der Wasser enthält und derart angeordnet ist, dass er Wasser durch die Öffnung (4) ein- und auslässt;
eine Wasserführung (90), die in dem Hauptkörper (2) installiert ist, um das Wasser zu enthalten, das aus dem Wasserbehälter (82) geflossen ist;
ein Befeuchtungsfilter (100), das auf der Wasserführung (90) montiert ist, um Feuchtigkeit an Luft zuzuführen, die in Richtung des Gebläses (50) strömt; und
eine Reinigungseinheit (110), die angeordnet ist, um die Luft, die in Richtung des Befeuchtungsfilters (100) strömt, zu reinigen und das Wasser durch die Öffnung (4) ein- und auszulassen,
wobei die seitliche Breite der Öffnung (4) größer als die Summe der seitlichen Breite der Reinigungseinheit (110) und der seitlichen Breite des Wasserbehälters (82) ist, und die Höhe der Öffnung (4) größer als die Höhe der Reinigungseinheit (110) und die Höhe des Wasserbehälters (82) ist, und wobei das Gebläse (50) eine Trennwand (65) hat, die zum Unterteilen der Vorderseite des Ventilatorgehäuses (60) in einen Raum, durch den Luft geht, und einen Raum, in dem der Wasserbehälter (82) angeordnet ist, vorsteht, **dadurch gekennzeichnet, dass**
das Gebläse (50) Rippen (68, 69), die den Wasserbehälter (82) berühren, hat, die auf einer Oberfläche vorstehen, die dem Wasserbehälter 882) gegenüber liegt.

2. Klimaanlage nach Anspruch 1, wobei der Wasserbehälter (82) und die Reinigungseinheit (110) derart angeordnet sind, dass sie links und rechts in dem Hauptkörper (2) angeordnet sind.

3. Klimaanlage nach Anspruch 1, wobei die Rippen (68, 69) Vorderrippen (68), die ausgebildet sind, um den Wasserbehälter (82) in Berührung mit einem Vorderplattenabschnitt (62) des Gebläses (50) zu bringen, und Seitenrippen (69), die ausgebildet sind, um den Wasserbehälter (82) mit der Trennwand (65) in Berührung zu bringen, aufweisen.

4. Klimaanlage nach Anspruch 1, wobei der Hauptkörper (2) ein hinteres Gehäuse (36) und ein vorderes Gehäuse (40) hat, das auf der Vorderseite des hinteren Gehäuses angeordnet ist und die Öffnung (4) an einem vorderen Abschnitt ausgebildet hat und den Luftauslass (6) an einem oberen Oberflächenabschnitt ausgebildet hat.

5. Klimaanlage nach Anspruch 4, wobei das vordere Gehäuse (40) einen unteren Lufteinlass (46) hat, der in einem unteren Abschnitt (45) ausgebildet ist.

6. Klimaanlage nach Anspruch 5, wobei der das untere Lufteinlass (46) derart ausgebildet ist, dass er längs an einer Unterseite zwischen der Öffnung (4) und der Wasserführung (90) geöffnet ist.

7. Klimaanlage nach Anspruch 4, wobei die Öffnung (4) von den linken und rechten Plattenabschnitten des vorderen Gehäuses (40) und einem vorderen Plattenabschnitt des vorderen Gehäuses (40) an einem Seitenplattenabschnitt (42) nahe dem Wasserbehälter (82) ausgebildet ist.

8. Klimaanlage nach Anspruch 7, wobei die Frontklappe (10) einen Luftansaugdurchgang (18) hat, der an der Vorderseite der Öffnung (4) ausgebildet ist.

9. Klimaanlage nach Anspruch 7, wobei die Frontklappe (10) ein Anzeigefenster (13) zum Betrachten des Wasserbehälters (82) hat, das in einer der Öffnung (4) gegenüberliegenden Position installiert ist.

10. Klimaanlage nach Anspruch 4, wobei das das Gebläse (50) aufweist:
einen Ventilatormotor (54), der auf dem hinteren Gehäuse (36) montiert ist;
einen Ventilator (56), der mit dem Ventilatormotor (54) gekoppelt ist; und
ein Ventilatorgehäuse (60), das derart installiert ist, dass es den Ventilator (56) zusammen mit dem hinteren Gehäuse (36) umgibt und eine Saugeinheit (57) hat, die an einem vorderen Oberflächenabschnitt ausgebildet ist, um Luft, die in den Ventilator (56) eingesaugt wird, durchzulassen, und eine Abgabeeinheit (58) hat, die an einem oberen Abschnitt des Umfangsabschnitts ausgebildet ist, um mit dem Luftauslass (6) in Verbindung zu stehen.

11. Klimaanlage nach Anspruch 4, wobei ein Reinigungseinheits-Halteabschnitt (190) zum Halten der Reinigungseinheit (110) auf dem Gebläse (50) und dem vorderen Gehäuse (40) auf der Reinigungseinheit (110), dem Gebläse (50) und dem vorderen Gehäuse (40) ausgebildet ist.

12. Klimaanlage nach Anspruch 11, wobei der Reinigungseinheits-Halteabschnitt (190) aufweist:
einen linken vorstehenden Abschnitt (192), der auf der linken Seite der Reinigungseinheit (110) vorsteht;
einen rechten vorstehenden Abschnitt (193), der auf der rechten Seite der Reinigungseinheit (110) vorsteht;
einen linken Montageabschnitt (194), der an dem Gebläse (50) oder dem vorderen Gehäuse (40) ausgebildet ist, um den linken vorstehenden Abschnitt (192) darauf anzuordnen und zu halten; und
einen rechten Montageabschnitt (195), der an dem anderen des Gebläses (50) oder des vorderen Gehäuses (40) ausgebildet ist, um den rechten vorstehenden Abschnitt (193) darauf anzuordnen und zu halten.

13. Klimaanlage nach Anspruch 4, wobei ein Reinigungseinheits-Befestigungs-/Löseabschnitt (200) zum elastischen Befestigen der Reinigungseinheit (110) an der Wasserführung (90) oder Lösen davon an der Reinigungseinheit (110) und der Wasserführung (90) ausgebildet ist.

14. Klimaanlage nach Anspruch 13, wobei der Reinigungseinheits-Befestigungs-/Löseabschnitt (200) aufweist:
vorstehende Abschnitte (206, 207), die an der Reinigungseinheit (110) oder der Wasserführung (90) ausgebildet sind; und
elastische Einhängabschnitte (203, 204), die an der anderen der Reinigungseinheit (110) und der Wasserführung (90) ausgebildet sind und Einhänglöcher (201, 202) zum Einklinken der vorstehenden Abschnitte (206, 207) haben.

## Revendications

1. Climatiseur, comprenant :
un corps principal (2) possédant une sortie d'air (6) et possédant une ouverture (4) formée à l'avant de celui-ci ;
une porte avant (10) installée pour couvrir ou exposer l'ouverture (4) ;
un souffleur (50) installé sur le corps principal (2) ;
un contenant d'eau (82) contenant de l'eau, et disposé pour laisser l'eau entrer et sortir à travers l'ouverture (4) ;
un guidage d'eau (90) installé à l'intérieur du corps principal (2) afin de contenir l'eau s'étant écoulée à partir du contenant d'eau (82) ;
un filtre humidifiant (100) monté sur le guidage d'eau (90) afin de fournir de l'humidité à de l'air s'écoulant vers le souffleur (50) ; et
une unité de purification (110) disposée pour purifier l'air s'écoulant vers le filtre humidifiant (100) et laisser l'eau entrer et sortir à travers l'ouverture (4),
dans lequel la largeur latérale de l'ouverture (4) est supérieure à la somme de la largeur latérale de l'unité de purification (110) et de la largeur latérale du contenant d'eau (82), et la hauteur de l'ouverture (4) est supérieure à la hauteur de l'unité de purification (110) et la hauteur du contenant d'eau (82), et le souffleur (50) possède une paroi de séparation (65) qui est en saillie pour séparer l'avant du logement de ventilateur (60) en un espace à travers lequel de l'air passe et un espace dans lequel le contenant d'eau (82) est situé, **caractérisé en ce que**
le souffleur (50) possède des nervures (68, 69) entrant en contact avec le contenant d'eau (82) qui sont en saillie sur une surface faisant face au contenant d'eau (82).

2. Climatiseur selon la revendication 1, dans lequel le contenant d'eau (82) et l'unité de purification (110) sont disposés pour être situés à gauche et à droite à l'intérieur du corps principal (2).

3. Climatiseur selon la revendication 1, dans lequel les nervures (68, 69) comprennent des nervures avant (68) formées pour mettre le contenant d'eau (82) en contact avec une portion de panneau avant (62) du souffleur (50) et des nervures latérales (69) formées pour mettre le contenant d'eau (82) en contact avec la paroi de séparation (65).

4. Climatiseur selon la revendication 1, dans lequel le corps principal (2) possède un boîtier arrière (36) et un boîtier avant (40) qui est disposé à l'avant du boîtier arrière et possède l'ouverture (4) formée dans une portion avant et la sortie d'air (6) formée dans une portion de surface supérieure.

5. Climatiseur selon la revendication 4, dans lequel le boîtier avant (40) possède une entrée d'air inférieure (46) formée dans une portion inférieure (45).

6. Climatiseur selon la revendication 5, dans lequel l'entrée d'air inférieure (46) est formée pour être ouverte longitudinalement sur un côté inférieur entre l'ouverture (4) et le guidage d'eau (90).

7. Climatiseur selon la revendication 4, dans lequel l'ouverture (4) est formée dans une portion de panneau latérale (42) près du contenant d'eau (82) parmi des portions de panneau gauche et droite du boîtier avant (40) et une portion de panneau avant du boîtier avant (40).

8. Climatiseur selon la revendication 7, dans lequel la porte avant (10) possède un passage d'aspiration d'air (18) formé à l'avant de l'ouverture (4).

9. Climatiseur selon la revendication 7, dans lequel la porte avant (10) possède une fenêtre de présentation (13) pour voir le contenant d'eau (82) installé dans une position faisant face à l'ouverture (4).

10. Climatiseur selon la revendication 4, dans lequel le souffleur (50) comprend :
un moteur de ventilateur (54) installé sur le boîtier arrière (36) ;
un ventilateur (56) accouplé au moteur de ventilateur (54) ; et
un logement de ventilateur (60) installé pour entourer le ventilateur (56) conjointement avec le boîtier arrière (36) et possédant une unité d'aspiration (57) formée dans une portion de surface avant pour faire passer de l'air aspiré dans le ventilateur (56) à travers et une unité d'évacuation (58) formée dans une portion supérieure de la portion périphérique pour communiquer avec la sortie d'air (6).

11. Climatiseur selon la revendication 4, dans lequel une portion de support d'unité de purification (190) pour supporter l'unité de purification (110) sur le souffleur (50) et le boîtier avant (40) est formée sur l'unité de purification (110), le souffleur (50), et le boîtier avant (40).

12. Climatiseur selon la revendication 11, dans lequel la portion de support d'unité de purification (190) comprend :
une portion saillante gauche (192) en saillie sur le côté gauche de l'unité de purification (110) ;
une portion saillante droite (193) formée sur le côté droit de l'unité de purification (110) ;
une portion de montage gauche (194) formée sur l'un quelconque parmi le souffleur (50) et le boîtier avant (40) afin de placer et de supporter la portion saillante gauche (192) sur celle-ci ; et
une portion de montage droite (195) formée sur l'autre parmi le souffleur (50) et le boîtier avant (40) afin de placer et de supporter la portion saillante droite (193) sur celle-ci.

13. Climatiseur selon la revendication 4, dans lequel une portion de fixation/de séparation d'unité de purification (200) pour fixer ou séparer élastiquement l'unité de purification (110) au ou à partir du guidage d'eau (90) est formée sur l'unité de purification (110) et le guidage d'eau (90).

14. Climatiseur selon la revendication 13, dans lequel la portion de fixation/de séparation d'unité de purification (200) comprend :
des portions saillantes (206, 207) qui sont formées sur l'un quelconque parmi l'unité de purification (110) et le guidage d'eau (90) ; et
des portions de suspension élastiques (203, 204) qui sont formées sur l'autre parmi l'unité de purification (110) et le guidage d'eau (90) et possédant des trous de suspension (201, 202) pour verrouiller les portions saillantes (206, 207).
